# EUROPÄISCHE PATENTANMELDUNG

(11) **EP 2 306 710 A2**
(43) Veröffentlichungstag der Anmeldung: **06.04.2011**
(21) Anmeldenummer: 10174499.3
(22) Anmeldetag: 30.08.2010
(51) Int. Cl.: H04N 5/44, H04N 5/445

(54) **Benutzerkontrolleinrichtung für einen Rundfunkempfänger**

(30) Priorität: 03.09.2009 DE 102009041246
(71) Anmelder: TechniSat Digital GmbH, 54550 Daun (DE)
(72) Erfinder: Rother, Norman, 01187 Dresden (DE); Despang, Dominique, 01465 Dresden (DE); Kön, Stefan, 54531 Manderscheid (DE)

(57) **Zusammenfassung**

Die Erfindung betrifft eine programmierbare Benutzungskontrolleinrichtung für einen Rundfunkempfänger zum Einrichten und Überwachen von begrenzten Nutzungsrechten für den Empfang von Hörrundfunk- oder TV-Rundfunkprogrammen. Die Kontrolleinrichtung ermöglicht Nutzern mit einem Administrationsrecht für den Rundfunkempfänger, beispielsweise innerhalb einer Familie den Erwachsenen, für andere definierte Mitnutzer, beispielsweise Kinder, den Zugang zur Rundfunkempfängernutzung einzuschränken. Die Einschränkung des Nutzungsrechtes kann an Hand verschiedener Kriterien, wie Benutzungszeit, Zeitkontingent oder des Inhaltes von Programmen oder einzelnen Programmbeiträgen erfolgen. Gemäß der Erfindung bietet ein interaktiver Konfigurationsmodus dem durch Code-Eingabe autorisierten Benutzer die Möglichkeit, separate Nutzerkonten für Mitbenutzer einzurichten und für jedes Nutzerkonto individuelle Vorgabedaten zu definieren.

## Beschreibung

Die Erfindung betrifft eine programmierbare Benutzungskontrolleinrichtung für einen Rundfunkempfänger zum Einrichten und Überwachen von begrenzten Nutzungsrechten für den Empfang von Hörrundfunk- oder TV-Rundfunksendungen. Die Kontrolleinrichtung ermöglicht bestimmten Nutzern mit einem Administrationsrecht für den Rundfunkempfänger, beispielsweise innerhalb einer Familie den Erwachsenen, für andere definierte Mitnutzer, wie Kindern, den Zugang zur Rundfunkempfängernutzung einzuschränken. Die Einschränkung des Nutzungsrechtes kann an Hand verschiedener Kriterien, wie Benutzungszeit, Zeitkontingent oder des Inhaltes von Programmen und anderen Diensten, wie Internetzugängen und Aufzeichnungsmedien oder von einzelnen Sendungen oder Aufzeichnungen erfolgen.

### Technischer Hintergrund

Es ist bekannt, insbesondere Rundfunkempfänger für den Fernsehempfang mit einer Benutzungskontrolleinrichtung auszustatten, welche der Durchsetzung von gesetzlichen Anforderungen von Jugend- und Kinderschutz vor Programmen mit jugendgefährdendem Programminhalt dient und möglichen schädlichen Einflüssen durch die Medien auf Kinder und Jugendliche durch ein Begrenzen von Zugriffsrechten entgegenwirkt. Ein unkontrollierter Fernsehkonsum wird bei Kindern und Jugendlichen vermieden, indem eine derartige Benutzungskontrolleinrichtung den Zugriff auf bestimmte Programme oder Programmbeiträge verhindert. Die Kontrolleinrichtung funktioniert gewöhnlich nach dem Administrator-Nutzer-Prinzip und ist über einen Sperrmodus, der nur nach einer Identifikation verfügbar ist, einstellbar.

Im Sperrmodus haben die Eltern mit einem Administratorrecht die Möglichkeit, selbst alle Programme uneingeschränkt zu empfangen und mit der Fernbedienung auf dem Bildschirm ein interaktives Sperrmenü aufzurufen, in dem wahlweise bestimmte Programme und Programmbeiträge für eine zukünftige Benutzung ohne Identifikation gesperrt werden können. Die Programmsperre kann sowohl den Empfang und die Wiedergabe als auch das Aufzeichnen ohne Codeeingabe betreffen. Ein Ändern von Geräteeinstellungen im Sperrmenü, wie das Entfernen von Programmsperren ist nur noch mit dem Administratorrecht möglich.

Beispielsweise realisiert ein herkömmlicher Rundfunkempfänger die Jugend- und Kinderschutzfunktion dadurch, dass auf Wunsch mit der Gerätefernbedienung Einstelloptionen zum Einrichten von Programmsperren bestehen. Unter einem elektronischen Programmführer ist im Sinne dieser Erfindung ein mit Bedienelementen, wie der Fernbedienung, interaktiv steuerbarer Programmführer zu verstehen. Aufgrund der Integration in den Rundfunkempfänger lässt sich aus dem steuerbaren Programmführer heraus das Programmumschalten oder die Aufnahme einer ausgewählten Sendung programmieren. Der Programmführer wird grafisch dargestellt und beinhaltet mindestens den Titel, die Uhrzeit und die Dauer jeder Sendung. Zusätzlich können zu den einzelnen Sendungen kurze Beschreibungen des Inhalts angezeigt werden. Im digitalen Fernsehen (DVB) werden die Programmführer-Daten nach dem DVB-SI-EIT-Standard übertragen. Diese beinhalten unter anderem eine Aufstellung mit Information zu jeder Fernsehrundfunksendung, wie eine standardgemäße Event Information Table (EIT). Die Rundfunksender übertragen dabei Zusatzinformation, wie Kennungen, welche die jeweilige Programmart entsprechend Kategorie bzw. Klassifikation, wie Spielfilm, Sportveranstaltung, Kinderprogramm oder Altersbeschränkungen entsprechend der Freiwilligen Kontrolle der Filmwirtschaft, kurz FSK, für den entsprechenden Programmbeitrag beschreiben. Dafür dienen entsprechend dem Standard ETS-300 468 die sogenannten DVB-Deskriptor Markierungen insbesondere der "content_descriptor" oder der "parental_rating_descriptor". Anhand der bereitgestellten Informationen innerhalb der EIT ist es für Eltern möglich, Rundfunksendungen mit bestimmter Programmkennung innerhalb der Programmführerfunktion zu sperren.

Die Gerätesteuerung stellt zum Einrichten von Sperren für den Rundfunkempfang und die Programmwiedergabe, auch Medienwiedergabe, ein Konfigurationsmenü bereit. Mit diesem Menü kann ein frei wählbarer Gerätecode für den Zugang, beispielsweise für Eltern, eingestellt werden, sodass die Gerätesteuerung des Rundfunkempfängers künftig sowohl vor dem Ausführen von bestimmten interaktiven Einstellungen als auch vor dem Empfangen und Wiedergeben von gesperrten Programmdiensten und dem Ausführen von Recorderfunktionen und Verwaltungsfunktionen eine Abfrage des Gerätecodes vornimmt. Ohne die Eingabe des Gerätecodes sind die genannten Empfängerfunktionen nicht mehr möglich. Das Konfigurationsmenü bietet außerdem individuell setzbare Sperren für einzelne Programmdienste an. Dabei werden nach dem Autorisieren mit dem Gerätecode beispielsweise ausgewählte Programmdienste gegen einen unerwünschten Zugriff zum Sperren markiert. Wird der Empfänger erneut eingeschaltet, erscheint bei einem Aufruf eines gesperrten Programms die Codeabfrage, die erfolgreich ausgeführt werden muss, bevor der Programmdienst wiedergegeben wird. Ein Mitbenutzer des Empfängers, wie ein Kind, hat danach ohne Kenntnis des Gerätecodes keinerlei Zugriff auf die als gesperrt markierten Programmdienste. Ein Löschen von gesetzten Programmsperren können die Eltern nur in einem Einstellmenü aufheben, das ebenfalls nur durch Codeabfrage erreichbar ist.

Ein Nachteil der beschriebenen Lösung besteht jedoch darin, dass die programmierbare Benutzungskontrolleinrichtung zwar für Personen, welche den Gerätecode nicht kennen, den Zugriff auf gesperrte Programmdienste verhindert, jedoch keine Möglichkeiten bietet, den zeitlichen und sachlichen Umfang der Nutzung eines Rundfunkempfängers nach den Vorstellungen von Kindeseltern zielgerichtet an mitbenutzende Kinder anzupassen. Darüber hinaus besteht keine Möglichkeit, differenzierte Einstellungen für den Wiedergabemodus mit dem Rundfunkempfänger vorzunehmen, um Eltern zu ermöglichen, beim Einstellen der Programmsperren die Altersunterschiede von Kindern zu berücksichtigen.

Aus dem Stand der Technik ist die W009606501 bekannt, die eine Vorrichtung zur umfassenden elterlichen Kontrolle der Fernsehnutzung durch den Ausschluss oder Einschluss ausgewählter Programme, Kanäle und /oder Zeiten beschreibt. Die Vorrichtung umfasst unter anderem eine Steuereinheit mit Mikroprozessor, einen ROM-Speicher, einen Speicher für Identifizierungsnummern und einen Speicher zum Speichern von ausgewählten Programmen, Kanälen, Daten und Zeiten, eine Einheit zur Eingabe eines Identifizierungscodes und zusätzlich Hardware zur elterliche Kontrolle.

### Wesen der Erfindung

Es ist die Aufgabe der Erfindung, eine Kontrollmöglichkeit zum Festlegen und zum Überwachen von Grenzen für eine Empfängernutzung durch weitere Personen zu schaffen, welche gegenüber den bekannten Empfängern erweiterte Vorgabemöglichkeiten für Mitnutzer bezüglich von Einschränkungen auf den Zugriff, sowie die Wiedergabe von Programmdiensten bietet und differenzierte Einstellungen ermöglicht, ohne zusätzliche Hardwarekomponenten zu verwenden. Insbesondere soll eine Benutzungskontrolleinrichtung den Zugriff von Kindern auf den Betrieb im Wiedergabemodus auch zeitlich und sachlich beschränken.

Die vorliegenden Erfindung geht von der Erkenntnis aus, dass ein interaktiver Programmführer über alle erforderlichen Funktionen zum Auswählen, Einstellen, Programmieren von Programmbeiträgen, zum Speichern und Verwalten einer Videorekorderfunktion, zum Abfragen von Geräteanschlüssen und Abspielen von angeschlossenen Geräten durch einen Nutzer verfügt.

Zum Lösen der Aufgabe nutzt die Erfindung eine Benutzerkontrolleinrichtung für einen Rundfunkempfänger, wobei die Benutzerkontrolleinrichtung innerhalb einer interaktiven elektronischen Programmführereinheit installiert ist, welche eine Gerätesteuerung aufweist, die Bedienmenüs und interaktive Konten-Konfigurationsmenüs mit Einstelloptionen bereitstellt und in nichtflüchtigen Speichermitteln gemeinsam mit Daten für das Kontenkonfigurationsmenü und Zusatzinformation der Programmführereinheit speichert. Der Rundfunkempfänger kann auch zusätzlich ein Multimediaempfänger mit Netzzugriff beispielsweise Internet sein.

Die Bedienmenüs werden zum Bedienen des Rundfunkempfängers mithilfe des elektronischen Programmführers realisiert. Es werden beispielsweise das Umschalten zwischen Programmdiensten sowie das Aufnehmen von Programmbeiträgen unterstützt. Das Konten-Konfigurationsmenü weist Einstelloptionen auf, mit denen ein, durch einen Gerätecode autorisierter Benutzer für Mitbenutzer Restriktionen bezüglich der Medienwiedergabe oder des Zugriffes auf den Rundfunkempfänger einrichten kann. Medienwiedergabe kann die Wiedergabe von Rundfunksendungen, das Aufrufen von Internetseiten, gespeicherten Daten von Bildern und Musik betreffen, sowie das Abspielen von angeschlossenen Geräten.

Im Wiedergabemenü überwacht die Gerätesteuerung mithilfe einer Datenabfrage selbsttätig das Einhalten der eingerichteten Restriktionen und sperrt bestimmte Empfängerfunktionen und die Wiedergabe beim Überschreiten von Grenzwerten. Um zu verhindern, dass jeder Benutzer des Rundfunkempfängers einen uneingeschränkten Zugriff auf alle Netzwerkfunktionen, wie Empfangs-, Aufzeichnungs-, Wiedergabe- und Einstellfunktionen hat, muss der autorisierte Benutzer in einem Abfragemenü die Codeabfrage durch das Setzen eines Aktivierungseintrages aktivieren. Der Aktivierungseintrag löst die Funktion der Benutzungskontrolleinrichtung, insbesondere die Codeabfrage und einen periodischen Datenvergleich aus.

Gemäß der Erfindung hat die Benutzungskontrolleinrichtung Zugriff auf aktuelle Betriebsdaten von Funktionseinheiten des Rundfunkempfängers und vergleicht die Betriebsdaten mit den nutzerbezogenen Vorgabedaten des aktuellen Mitbenutzers. Zu diesen Funktionseinheiten gehören: eine systeminterne Uhr für die aktuelle Zeit und eine Einschaltzeit-Messeinrichtung. Die Einschaltzeit-Messeinrichtung erfasst die Zeitdaten der Einschaltdauer der Netzverbindung und die nichtflüchtigen Speichermittel speichern diese Zeitdaten nutzerbezogen und kumulativ gemeinsam mit dem Aktivierungseintrag.

Gemäß eines weiteren Merkmals der Erfindung, bietet das interaktive Konfigurationsmenü dem autorisierten Benutzer die Möglichkeit, separate Nutzerkonten einzurichten und für jedes Nutzerkonto individuelle Vorgabedaten zu definieren. Diese Vorgabedaten legt die Gerätesteuerung parallel mit den Zeitdaten für jedes Nutzerkonto in die nichtflüchtigen Speichermittel ab, sodass diese neben dem Aktivierungseintrag auch nach dem Ausschalten des Rundfunkempfängers noch verfügbar sind.

Jedem Mitbenutzer des Rundfunkempfängers kann auf diese Weise ein separates Nutzerkonto mit individuellen Vorgabedaten zum Zugriff auf und zur Nutzung des Rundfunkempfängers zugeordnet werden, welches zusätzlich Zeitdaten zur aktuell konsumierten Einschaltdauer für einen Soll-Ist-Vergleich bereitstellt. Die Vorgabedaten können sowohl ein Einschaltzeitkontingent als auch zeitliche und sachliche Restriktionen für das Empfangen und das Wiedergeben der Programmdienste betreffen. Die zeitlichen Restriktionen können Nutzungsverbote des Rundfunkempfängers zu bestimmten Tageszeiten definieren, während die sachlichen Restriktionen Zugangsverbote zu bestimmten Programmdiensten, wie Internetzugriff und Programmbeiträgen beinhalten. Zu den sachlichen Restriktionen zählen Einschränkungen, die das Ausführen von Funktionen wie TV-und Radiodienste, Internet, Widgets, Wiedergabe gespeicherter Musik -und Bilddaten betreffen.

Für die Funktion der Erfindung ist es jedoch nicht erforderlich, dass die individuellen Vorgabedaten jedes Nutzerkonto zwingend ein Einschaltzeitkontingent und auch zeitliche und sachliche Restriktionen enthalten. Es kann auch Nutzerkonten geben, bei denen die Vorgabedaten zu einem Einschaltzeitkontingent oder einer Restriktion fehlen.

Die Gerätesteuerung gibt die Einstelloption zum Aktivieren und Konfigurieren eines separaten Nutzerkontos nur dann frei, wenn für einen zukünftigen, also erneuten Zugang zum Konfigurationsmenü und zu einer zukünftigen restriktionsfreien Wiedergabe eine Codeabfrage aktiviert ist. Die Codeabfrage hat zur Folge, dass in der Zukunft zeitlich und sachlich restriktionsfreie Zugriffe zum Wiedergabemodus aller Programmdienste und zu Gerätefunktionen nur noch mithilfe eines Benutzer-Vollzugangs für autorisierte Benutzer möglich sind. Das heißt, solange mindestens ein Nutzerkonto noch aktiv ist, erfolgt beispielsweise mindestens einmal innerhalb einer Einschaltdauer des Rundfunkempfängers eine Codeabfrage, wenn das Wiedergabemenü oder das Konfigurationsmenü aufgerufen wird. Es ist somit auch nicht möglich, die Einstellungen eines Nutzerkontos ohne Autorisation zum Benutzer-Vollzugang zu ändern. Der Identifikationscode für die Codeabfrage sollte gewöhnlich nur den Erwachsenen bekannt sein. Der Benutzer-Vollzugang beinhaltet weder ein Zeitkontingent noch andere Restriktionen und ermöglicht erst ein Verändern aller vorhandener Empfängerkonfigurationen im vollen Funktionsumfang.

In einer vorteilhaften Ausführung der Erfindung legt die Gerätesteuerung automatisch einen Benutzer-Vollzugang mit der Codeabfrage an, wenn der autorisierte Benutzer im Konfigurationsmodus mindestens ein separates Nutzerkonto aktiviert. Zusätzlich fordert die Gerätesteuerung selbsttätig beim Einrichten jedes Nutzerkontos durch ein Anfragemenü zum Ädern des eingestellten Codes auf. Dieses erhöht den Komfort des Konfigurationsmodus und die Schutzfunktion der Benutzungskontrolleinrichtung gegen Missbrauch durch einen Mitbenutzer deutlich.

Vorteilhaft ermöglicht die Benutzungskontrolleinrichtung gemäß der Erfindung im Konfigurationsmenü mindestens für einen Mitbenutzer ein Nutzercode anzulegen, für den die Gerätesteuerung eine Codeabfrage des persönlichen Nutzercodes realisiert. Auf diese Weise können Eltern für ihre Kinder separate und altersgerechte Nutzerkonten mit verschiedenen Nutzungskontingenten und verschiedenen zeitlichen Restriktionen zu einer kontospezifischen Empfangs-Tageszeit und sachliche Restriktionen bezüglich einer kontospezifischen Sperre von Programmdiensten einrichten. Darüber hinaus kann für leseunkundige Kinder auch ein Nutzerkonto mit einem kontospezifischen Nutzungskontingent und Programmsperren eingerichtet werden, welches ohne Codeabfrage zugänglich ist.

Sobald die Gerätesteuerung bei einem Neustart oder einem Umschalten des Rundfunkempfängers im Wiedergabemenü den gesetzten Aktivierungseintrag findet, ruft diese während des Empfangsmodus die obengenannten individuellen Vorgabedaten für das aktuelle Nutzerkonto aus den Speichermitteln ab und vergleicht periodisch die Vorgabedaten für das aktuelle Nutzerkonto mit dessen aktuellen Betriebsdaten aus den obengenannten Funktionseinheiten. Insbesondere vergleicht die Gerätesteuerung die Zeitdaten für das individuelle Einschaltzeitkontingent mit den kumulativen Zeitdaten von der Einschaltzeit-Messeinrichtung und den Vorgabedaten zu Restriktionen für die Empfangstageszeit mit der aktuellen Zeit der systeminternen Uhr.

Sobald aktuell erfasste Betriebsdaten außerhalb der Vorgaben liegen, sperrt die Gerätesteuerung beispielsweise die Wiedergabe eines Programmdienstes für das aktuelle Nutzerkonto.

Auf Grund der, in den Rundfunkempfänger integrierten, Programmführereinheit zum Betreiben und Einstellen des Rundfunkempfängers durch eine graphische Benutzeroberfläche, welche Programmführerelemente beinhaltet und übersichtlich darstellt, wird in vorteilhafter Weise dem Nutzer des Rundfunkempfängers eine komfortable Bedienung zu einer Medienwiedergabe ermöglicht. Aus der graphischen Benutzeroberfläche des interaktiven steuerbaren Programmführers heraus lassen sich Funktionen, wie ein Umschalten von Programmdiensten, der Zugriff auf die Netzfunktionen, das Aufnehmen von ausgewählten Sendebeiträgen programmiert sowie das Wiedergeben von Programmdiensten. Darüber hinaus kann auch die Medienwiedergabe von externen Mediengeräten, beispielsweise einem Pay-TV Dienst, gestartet werden.

Um sicherzustellen, dass ein uneingeschränkter Informationszugang und unverzügliche Benachrichtigung über wichtige Tagesereignisse in Notfällen, wie Bränden, Katastrophen oder Gefahren für das Leben und die Gesundheit der Menschen verfügbar sind, kann in einer weiteren Ausführungsform der Erfindung auch ein Nutzerkonto ausschließlich zur Programmwiedergabe von Nachrichtensendungen und Informationssendungen eingerichtet werden. Ein solches Nutzerkonto sollte keine Vorgabedaten zur Codeabfrage enthalten, stattdessen jedoch Vorgabedaten zum Sperren von Programmdiensten. So kann vorteilhaft nur ein einziger Programmdienst eines Nachrichtenprogramms für den Wiedergabemodus freigegeben sein. Im Wiedergabemodus extrahiert die Gerätesteuerung die Programminformationsdaten, wie den Videotext oder die Service-Informationsdaten (DVB-SI) der entsprechenden Programmdienste, insbesondere die Servicedaten, welche eine Beschreibung der Programmart bzw. der Kategorie oder Programmklassifikation enthalten und gibt den Programmbeitrag nur zur Wiedergabe frei, wenn die Serviceinformationsdaten anzeigen, dass dieser Nachrichten oder aktuelle Information enthält.

Dafür werden vorrangig die DVB-Desciptor Tags innerhalb der Event Information Table (EIT), wie die Information des "content_descriptors" ausgewertet. Für dieses Nutzerkonto können die Vorgabedaten so konfiguriert sein, dass die Gerätesteuerung das Empfangsteil des Rundfunkempfängers allein beim Einschalten also ohne Codeabfrage auf den Wiedergabemodus dieses Programmdienstes einstellt, um aktuelle Nachrichten zu empfangen.

In einer weiteren vorteilhaften Ausführung der Erfindung generiert die Gerätesteuerung vor dem selbsttätigen Sperren des Zugangs zum Rundfunkempfänger und der Programmdienstwiedergabe eine Informationsausgabe, die sowohl ein zeitlich nahendes Erreichen als auch das unmittelbare Überschreiten des individuellen Nutzungskontingents oder der Restriktionen signalisiert.

Die Programmführereinheit der vorliegenden Erfindung trägt Information zu den Programmbeiträgen der folgenden Tage, von allen mit dem Rundfunkempfänger empfangbaren Programmdiensten zusammen, sodass zu jedem Programmbeitrag diverse Information, wie zum Beispiel Anfangszeit, Endzeit, Titel, ausführliche Beschreibung des Inhaltes und die Zusatzinformation zur Altersklassifizierung entsprechend der Freiwilligen Kontrolle der Filmwirtschaft, kurz FSK, in einer internen Datenbank gespeichert und zur Anzeige in Form von Menüs auf dem Wiedergabeschirm zur Verfügung steht. Im Zusammenhang mit der Fernbedienung und Bedienelementen verkörpert dieser Programmführer die Bedienzentrale des Rundfunkempfängers, der durch den Anschluss zu anderen Netzwerken und Mediengeräten zu einer Multimediazentrale wird. Die Programmführereinheit verfügt über alle Funktionen, die auch das Abfragen von Geräteanschlüssen und das Abspielen von angeschlossenen Geräten durch den Nutzer unterstützt.

Ein Vorteil der vorliegenden Erfindung ist, dass ohne zusätzliche Hardwarekomponenten, allein durch Konfiguration der Software der Programmführereinheit realisiert wird, dass die grafische Benutzeroberfläche im Umfang der dargestellten Information und entsprechend der zeitlichen und sachlichen Einschränkungen für jeden Nutzer angepasst am Bildschirm ausgegeben wird.

### Ausführungsbeispiel

Die Erfindung soll nachfolgend anhand eines Ausführungsbeispiels näher erläutert werden. Die vorliegende Beschreibung erläutert die Erfindung anhand einer typischen Anwendung. Dabei richten Erwachsene, die in der Beschreibung als autorisierter Nutzer bezeichnet werden, für minderjährige Kinder, in der Beschreibung als Mitbenutzer bezeichnet, personenbezogene Mitbenutzerkonten, in der Beschreibung nur als Nutzerkonten bezeichnet, zum individuellen Begrenzen und Überwachen der Empfängernutzung ein.

Das Grundprinzip der Kontrolle besteht darin, dass sich der Erwachsene nach dem Einschalten des Empfängers bei aktiver Jugendschutzfunktion mit individuellen Nutzerkonten immer für einen Benutzervollzugang mit einer Code-Eingabe des aktuellen Gerätecodes als Berechtigter autorisieren muss. Da davon auszugehen ist, dass die Kinder den aktuellen Gerätecode nicht kennen, stellt diese Maßnahme sicher, dass Mitbenutzer zwangsweise ihr persönliches Nutzerkonto für den Empfangsmodus nutzen müssen.

Im Sinne dieser Erfindung ist ein Benutzervollzugang, für den die Gerätesteuerung eine Code-abfrage vornimmt, kein Nutzerkonto, weil der Empfänger nach einer einmaligen Code-Eingabe wie ein konventioneller Empfänger bedienbar ist. Für den Benutzervollzugang existieren keine Restriktionen und kein Zeitkontingent. Die Gerätesteuerung beginnt ihre Überwachungsfunktion, wenn das Gerät aus und erneut eingeschaltet wurde.

Aus den Ausführungen wird verständlich, dass der Gegenstand der Erfindung alle möglichen Anwendungen zum Vorgeben von Einschränkungen eines Rundfunkempfängers bezüglich differenzierter Einstellungen betrifft. Insbesondere ist die Erfindung neben der Hauptanwendung auch für die Anwendung im medizinischen und sozialen Bereich wie für Krankenhäuser, Kinderheime und Erholungseinrichtungen geeignet.

Die Beschreibung der Erfindung geht von einem Rundfunkempfänger, unter anderem für den Empfang von Hör- und Fernsehrundfunkdiensten aus, welcher noch die ursprünglichen Werkseinstellungen ohne Jugendschutzfunktion aufweist. Das heißt, dieser Rundfunkempfänger besitzt nach dem Einschalten eine uneingeschränkte Funktionalität und die Programmbeiträge aller Programmdienste sind ohne Eingabe eines Identifikationscodes für jedermann frei verfügbar.

In einer besonderen Ausführungsform führt der Rundfunkempfänger Programmdienste aus, die neben dem Empfang von Rundfunkdiensten beispielsweise Internetfunktionen umfassen.

Der Rundfunkempfänger enthält eine Gerätesteuerung mit einer Nutzerschnittstelle in Form eines Fernbediensystems, welches neben dem Einstellen, Anzeigen und Überwachen von bekannten Empfängerfunktionen, wie dem Auswählen eines Programmdienstes, dem Einstellen von Audio-Visuellen Parametern des Wiedergabeteils auch eine interaktive Menüsteuerung zur Nutzerführung vorsieht. Die Gerätesteuerung generiert für die Nutzerschnittstelle interaktive Options- und Konfigurationsmenüs und zeigt Auswahl- und Bedienoptionen auf einem Bildschirm oder einem Anzeigegerät wie einer alpha-numerischen Anzeige an. Die Vorgaben für die Gerätesteuerung werden somit über ein Menü-Cursor-System zumindest durch Nutzereingaben über einen herkömmlichen Ferndienungsgeber des Fernbediensystems getätigt. Beim Einstellen der umfassenden Empfangsdaten und der Auswahl eines Programmdienstes nutzt die Gerätesteuerung als wesentliches Mittel einen interaktiven elektronischen Programmführer.

Die Erfindung wird am Beispiel eines Fernsehgerätes mit internem Bildschirm erläutert. Die Erfindung kann jedoch auch in separaten Fernseh- oder Hörrundfunkempfängern wie Set-Top-Boxen realisiert werden. In diesem Fall wird zur Menüführung eine geräteinterne Anzeigevorrichtung oder ein angeschlossener Fernsehempfänger als Monitor genutzt.

Die zugeordneten Figuren zeigen:
- FIG. 1: ein Optionsmenü zum Einschalten und Auswählen einer optionalen Jugendschutz- funktion für einen Rundfunkempfänger
- FIG. 2: ein Übersichtsmenü zum Einschalten der Nutzerkontenfunktion und zum Auswählen und Anzeigen verschieden konfigurierbarer Nutzerkonten, welches die Option zum Ein- richten und Aktivieren von Optionsmenüs für separate Nutzerkonten aufrufen
- FIG. 3: ein Optionsmenü für ein ausgewähltes Nutzerkonto mit Optionen zum Festlegen von Vorgabedaten, welche die Programmwiedergabe über das Nutzerkonto limitieren
- FIG. 4: ein Auswahlmenü für Vorgaben zum Festlegen von Programmdiensten, welche für den Wiedergabemodus über das ausgewählte Nutzerkonto zugelassen sind
- FIG. 5: ein Zeitvorgabemenü für Vorgaben zum Festlegen von Zugriffszeiten und einem Zeit- kontingent zur Programmwiedergabe über das ausgewählte Nutzerkonto
- FIG. 6a bis FIG. 6c: verschiedene Ausführungen eines Begrüßungsmenüs, das nach dem Anlegen und Konfigurieren mindestens eines Nutzerkontos und dem erneuten Ein- schalten des Rundfunkempfängers erscheint.

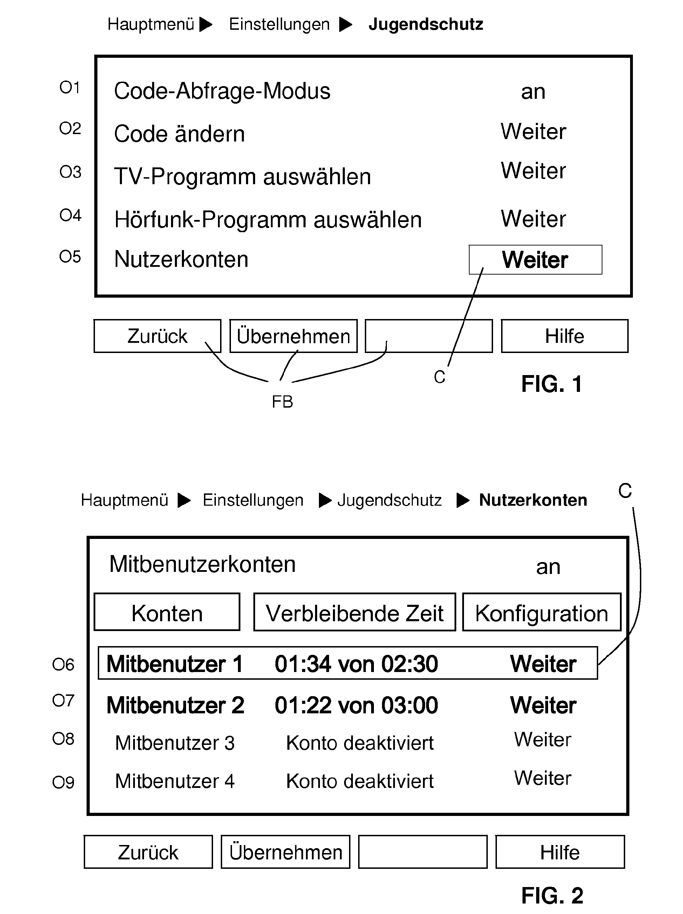

FIG. 1 zeigt beispielhaft die Darstellung eines Optionsmenüs zum Einschalten und Auswählen einer optionalen Jugendschutzfunktion für ein Fernsehgerät auf dem Wiedergabeschirm des Gerätes. Das Optionsmenü bietet eine Auswahl verschiedener Jugendschutzfunktionen und ein Aktivieren der Benutzungskontrolleinrichtung an. Die Menüoptionen O3 und O4 bieten dem Nutzer konventionelle Optionen.

Das interaktive Optionsmenü realisiert im Zusammenspiel mit der Gerätesteuerung und dem Fernbediensystem eine Reihe technischer Funktionen: Insbesondere können ausgewählte Programmdienste, wie Fernsehrundfunkprogramme als auch Hörrundfunkprogramme und Internetdienste auf konventionelle Weise für das Wiedergabemenü gesperrt werden. Wird ein gesperrter Programmdienst aufgerufen, stellt die Gerätesteuerung eine Code-Abfrage bereit und der Programmdienst kann erst nach Eingabe des Geräte-Codes empfangen werden.

Neben den konventionellen Schutzfunktionen der Menüoptionen O3 und O4 legt die Benutzungskontrolleinrichtung gemäß der vorliegenden Erfindung innerhalb der Menüoptionen O5 "Nutzerkonten" mithilfe der nichtdargestellten Gerätesteuerung differenzierte Nutzerkonten an, richtet die Konten ein und speichert die nutzerbezogenen Vorgabedaten beliebig lange in den nichtflüchtigen Speichermitteln.

Bevor die Gerätesteuerung im Optionsmenü den Weg zu einer der Menüoptionen O3 bis O5 öffnet, muss in der Menüoptionen O1 zunächst die Benutzungskontrolleinrichtung aktiviert werden. Dabei speichert die Gerätesteuerung in den nichtflüchtigen Speichermitteln einen Aktivierungseintrag, welcher die Funktion der Benutzungskontrolleinrichtung auslöst. Das Aktivieren erfordert zwangsläufig ein Einschalten des Code-Abfragemodus für den konventionellen Wiedergabemodus und für ein Aufrufen des Konfigurationsmodus des Empfängers. Ohne Kenntnis des aktuellen Geräte-Codes muss der Mitbenutzer zwangsläufig sein eingeschränktes Nutzerkonto zu nutzen.

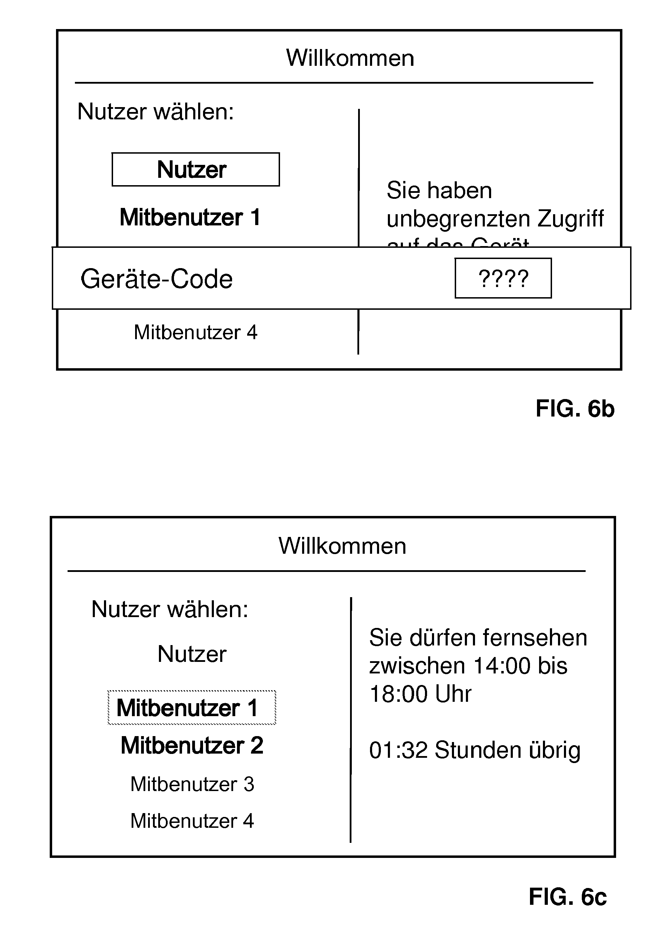

Vorteilhaft ruft die Gerätesteuerung dabei selbsttätig die Menüoptionen 02 "Code ändern" auf, um eine Codeabfrage des eingestellten Geräte-Codes vorzunehmen und diesen zu wechseln. Dadurch wird erschwert, dass ein Nutzer ohne Autorisierung Funktionssperren einrichten oder Vorgabedaten ändern kann. Darüber hinaus richtet die Gerätesteuerung einen Benutzer-Vollzugang mit der Codeabfrage ein. Damit erscheint zukünftig, das heißt nach einem erneuten Einschalten des Empfängers, vor dem Zugang zu den Gerätefunktionen und somit auch zum Empfangsmodus oder zum Konfigurationsmodus, eine in Figur. 6b gezeigte Codeabfrage.

Erst wenn die Menüoptionen O1 auf den Status "an" gesetzt ist, kann in den Menüoptionen O3 bis 05 eine Option für die Jugendschutzfunktion der Benutzungskontrolleinrichtung ausgewählt werden. Alle Konfigurationseinstellungen können entweder mit den Menüknöpfen "Zurück" "Übernehmen" oder "Hilfe" verworfen oder bestätigt werden. Die Menüknöpfe FB sind mit den farbigen Funktionstasten (Rot, Grün, Gelb, Blau) einer konventionellen Fernbedienung oder den Cursortasten (Auf, Ab, Rechts, Links) des Cursors C bedienbar, wobei die Menüsteuerung die Funktion der farbigen Funktionstasten und die Bezeichnungen der Menüknöpfe FB an die Menüoptionen anpasst.

FIG. 2 zeigt ein Übersichtsmenü "Nutzerkonten", das bei der Auswahl der Menüoption O5 in FIG. 1 erscheint. Das Übersichtsmenü "Nutzerkonten" ist, wie der Menüpfad im Menükopf zeigt, ein Untermenü des Optionsmenüs "Jugendschutz".

Diese Auswahl gestattet ein Einschalten der Nutzerkontenfunktion gemäß der Erfindung. Unter den Menüoptionen O6 bis O9 können insgesamt vier separate und verschieden konfigurierbare Nutzerkonten für Mitbenutzer eingerichtet werden. Das Aktivieren eines Nutzerkontos wird in der letzten Spalte "Weiter" mit den Cursortasten vorgenommen. Die mittlere Spalte des Übersichtsmenüs "Benutzerkonten" zeigt in einer Statusspalte "Verbleibende Zeit" für jedes Nutzerkonto den Aktivierungsstatus, das gesetzte Zeitkontingent und als Zahl vor dem Zeitkontingent die verbrauchte Gesamteinschaltzeit zu jedem Nutzerkonto an. Diese Betriebsdaten ermittelt die Gerätesteuerung mithilfe der systeminternen Uhr, die im vorliegenden Fall zusätzlich eine Kalenderfunktion enthält, und der Einschaltzeit-Messeinrichtung. Die Ermittlung erfolgt während des Einschaltmodus zu jedem Benutzerkonto separat und kumulativ und wird in den nichtflüchtigen Speichermitteln zu den Vorgabedaten jedes Nutzerkontos gespeichert.

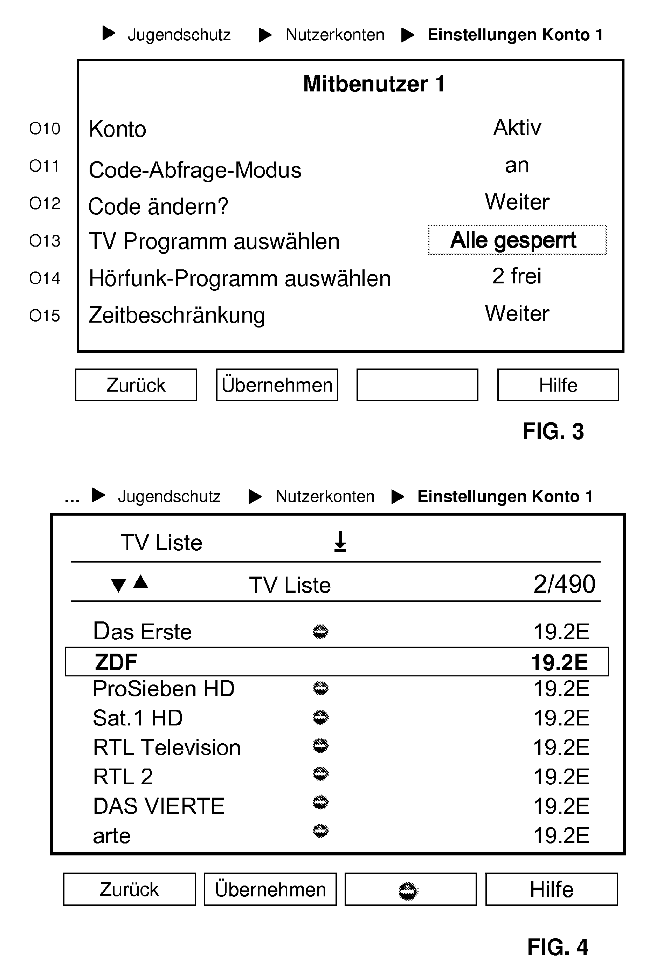

Nach dem Betätigen des Cursors C kann jedes Nutzerkonto mit einem in FIG. 3 gezeigten Optionsmenü "Einstellungen Konto n" mit kontobezogenen Vorgabedaten konfiguriert werden. Dafür sind für jedes ausgewählte Nutzerkonto die Menüoptionen O10 bis O15 zum Limitieren der Programmwiedergabe über das Nutzerkonto für eine menügestützte Eingabe von Vorgabedaten mit dem Fernbediengeber verfügbar. Mit der Menüoptionen O10 muss das ausgewählte Benutzerkonto aktiviert werden. Dabei legt die Gerätesteuerung einen Datensatz mit Vorgabedaten in den nichtflüchtigen Speichermitteln des Gerätes an. Wie bereits oben ausgeführt, ist der Code-Abfrage-Modus eine optionale Funktion. Eltern mit nur einem Kind brauchen beispielsweise die Option O11 nicht nutzen. Auch für ein Nutzerkonto zu Nachrichten- und Informationsdiensten darf diese Option auf aus bleiben.

Mit den Menüoptionen 013 und 014 können kontobezogene Programmdienste für den Empfang über das Nutzerkonto als sachliche Restriktionen vorgegeben werden.

Dagegen erlaubt die Menüoptionen 015 ein Vorgeben von zeitlichen Restriktionen und ein Festsetzen eines Zeitkontingents zum kumulativen Fernseh- und Hörfunkempfang über das ausgewählte Nutzerkonto.

FIG. 4 zeigt beispielhaft ein Auswahlmenü zum Eingeben von Vorgabedaten, welche zur Konfiguration von sachlichen Restriktionen für das Nutzerkonto 1 dienen. Dieses Menü stellt die Gerätesteuerung mit dem Betätigen des Cursors "Alles gesperrt" im Optionsmenü "Einstellungen Konto n" nach FIG. 3 bereit. Die gezeigte TV-Programmauflistung ist ein Auszug aus der TV-Liste des elektronischen Programmführers, der gemäß seinem Kopfbanner 490 verfügbare Programmdiensteinträge aufweist. Das Kopfbanner zeigt außerdem Bedienpfeile zum Ausführen einer Weiterschaltung der TV-Listenansicht und die aktuelle Positionsnummer des Cursors. Die mittlere Spalte der TV-Programmauflistung trägt für jeden Programmdiensteintrag ein Sperrzeichen. Der autorisierte Nutzer kann nun mithilfe der Fernbedienung einzelne Programmdienste für den Wiedergabemodus über das Nutzerkonto freigeben. Die Gerätesteuerung sperrt im Wiedergabemodus alle Programmdienste, welche noch das Sperrzeichen tragen.

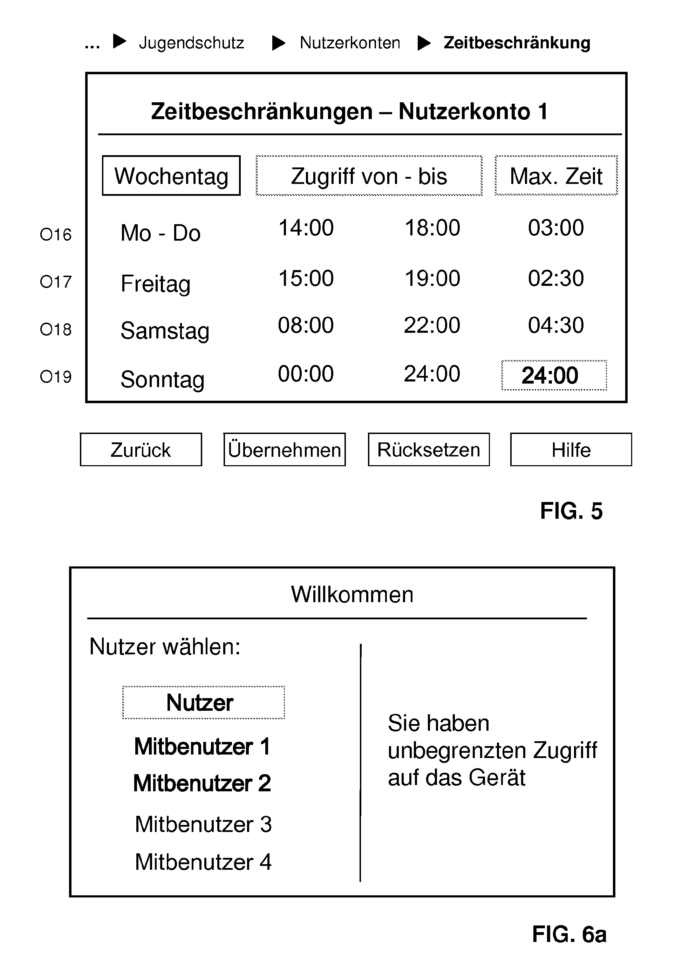

FIG. 5 zeigt beispielhaft ein Zeitvorgabemenü, das Untermenü "Zeitbeschränkung", welches die Gerätesteuerung ebenfalls für jedes Nutzerkonto aus dem Optionsmenü "Einstellungen Konto n" gemäß FIG. 3 mithilfe der Option 015 auf Wunsch bereitstellt. Im Gegensatz zum Auswahlmenü dient das Zeitvorgabemenü "Zeitbeschränkungen" zum Konfigurieren der Vorgabedaten für zeitliche Restriktionen und ein Festsetzen eines Zeitkontingents zum kumulativen Zugriff auf den Rundfunkempfänger über das ausgewählte Konto. Die zeitlichen Vorgaben können vorteilhaft über die Tage einer Woche verteilt mit den Optionen 016 bis 020 verschieden festgesetzt werden. In der mittleren Spalte des Auswahlmenüs kann optional eine Anfangszeit und eine Endzeit für einen täglichen Zeitbereich festgesetzt werden, zu der ein Fernsehen erlaubt ist. Darüber hinaus kann in der letzten Spalte ein Zeitkontingent für die kumulative maximale Zeitdauer zum Fernsehen festgelegt werden. Beispielsweise ein maximales tägliches Zeitkontigent von maximal 3 Stunden in der Tageszeit von 14:00 bis 18:00 Uhr.

Nach diesen Einstellungen kann die Konfiguration der Benutzerkonten beendet werden. Das erfolgt durch den Befehl "Übernehmen" über die Funktionstaste und Ausschalten des Fernsehgerätes.

Sobald die Gerätesteuerung bei einem Neustart des Fernsehgerätes den gesetzten Aktivierungseintrag in den nichtflüchtigen Speichermitteln findet, ruft diese das in FIG. 6 a gezeigte interaktive Begrüßungsmenü "Willkommen" auf und setzt den Cursor auf die Position Nutzer und kündigt den unbegrenzten Zugriff zum Gerät, den Benutzer-Vollzugang an. Wird der Benutzer-Vollzugang mit der Fernbedienung bestätigt, erfolgt in dem in FIG. 6b gezeigten zusätzlichen interaktiven Banner eine Abfrage des aktuellen Gerätekodes, um den Benutzer-Vollzugang einzugeben.

Ein Mitbenutzer, der den aktuellen Gerätekode nicht kennt, muss zu einem Nutzerkonto wechseln, zu dem er eine Benutzerberechtigung besitzt.

Für den Zugang zu einem Nutzerkonto zeigt die Gerätesteuerung das Begrüßungsmenü gemäß FIG. 6c an.

Bei einer Nutzung dieses Zugangs zeigt die Gerätesteuerung selbsttätig zumindest die zeitlichen Restriktionen und den Rest des Zeitkontingents an.

Während des Empfangsmodus im Bereich eines Nutzerkontos schaltet die Gerätesteuerung die programmierte Benutzungskontrolleinrichtung gemäß der Erfindung ein und fordert die obengenannten individuellen Vorgabedaten für das aktuelle Nutzerkonto aus den Speichermitteln ab.

Die Vorgabedaten für das aktuelle Nutzerkonto vergleicht diese periodisch mit den aktuellen Betriebsdaten aus den obengenannten Funktionseinheiten. Insbesondere vergleicht die Gerätesteuerung die Zeitdaten für das individuelle Einschaltzeitkontingent mit den kumulativen Zeitdaten von der Einschaltzeit-Messeinrichtung und die Vorgabedaten zu Restriktionen für die Empfangstageszeit mit der aktuellen Zeit und dem Datum der systeminternen Uhr.

In einer vorteilhaften Ausführung markiert die Gerätesteuerung in den Begrüßungsmenüs und in Konfigurationsmenüs deaktivierte Nutzerkonten optisch, wie beispielsweise durch eine kontrastarme Schriftdarstellung und überspringt in diesen Menüs die deaktivierten Nutzerkonten bei der Auswahl mit dem Cursor.

Eine ähnliche Unterdrückungsfunktion kann in den konfigurierten TV- und Hörrundfunklisten, den grafischen Benutzeroberflächen, der elektronischen Programmführereinheit angewendet werden. Gesperrte Programmdienste werden im Wiedergabemenü nicht mehr in den Programmlisten des Programmführers angezeigt und werden damit beim Aufruf mit den Cursortasten übersprungen. Für eine Bedienung durch Zifferneingabe auf der Fernbedienung erhalten die Programmdienste der Nutzerkonten jeweils eine geänderte Programmplatzzuordnung. So kann dann beispielsweise der Programmdienst Kinderkanal "KiKa" unter der Programmplatznummer eins und der Programmdienst "Nick" der Platznummer zwei zu erreichen sein.

In weiteren Menüfunktionen der Jugendschutzfunktion können zusätzliche Vorgabedaten, wie solche, die auf die Auswertung der oben genannten DVB-Desciptor Tags, wie der Auswertung des Programm-Inhalts-Descriptor "content_descriptor" oder des Jugendschutz-Rating-Descriptors der "parental_rating_descriptor beruhen, konfiguriert werden.

Damit können auch Nutzungsrechte konfiguriert werden, die sich auf den Programminhalt beziehen.

In einer Ausführungsform der Erfindung weist der autorisierte Nutzer jedem Mitbenutzer im entsprechenden Nutzerkonto ein Alter zu, sodass die Benutzerkontrolleinrichtung nur noch einen Vergleich der, mit den Programmbeiträgen empfangenen, Altersbeschränkung durchführt und dem Mitnutzer automatisch die Wiedergabe des Programmbeitrages sperrt oder freigibt.

In einer Ausführungsform der Erfindung wird beispielsweise in einem entsprechenden Empfänger der Zugang für die Internetwelt für Mitnutzer über die Eingabe von Restriktionen generell gesperrt oder auf einzelne Seiten beschränkt.

In einer weiteren Ausführungsform der Erfindung kann die Benutzerkontrolleinrichtung so konfiguriert werden, dass die Rechteverwaltung für den Zugriff auf den Rundfunkempfänger derart realisiert wird, dass für den oder die autorisierten Nutzer alle Dienste freigegeben aber für alle anderen Mitbenutzer gesperrt sind.

In einer weiteren Ausführungsform der Erfindung stoppt die Einschaltzeit-Messeinrichtung mit der Kumulation der Einschaltdauer, wenn die Wiedergabe eines Beitrages durch einen Mitbenutzer unterbrochen wird.

## Patentansprüche

1. Benutzungskontrolleinrichtung für einen Rundfunkempfänger, wobei die Benutzungskontrolleinrichtung innerhalb einer interaktiven elektronischen Programmführereinheit installiert ist, welche eine Gerätesteuerung aufweist, die Bedienmenüs und interaktive Konten-Konfigurationsmenüs mit Einstelloptionen bereitstellt und in nichtflüchtigen Speichermitteln gemeinsam Daten für das Konten-Konfigurationsmenü und Zusatzinformation der Programmführereinheit speichert, so dass
- ein durch einen Gerätecode autorisierter Benutzer für Mitbenutzer des Rundfunkempfängers separate Nutzerkonten mit Vorgabedaten für individuelle Einschaltzeitkontingente und Restriktionen zum Zugriff auf mit dem Rundfunkempfänger aktivierbare Programmdienste einrichtet
- die Gerätesteuerung selbsttätig mittels einer Codeabfrage und einer Datenabfrage das Einhalten der eingerichteten Restriktionen überwacht
- die Benutzungskontrolleinrichtung Zugriff auf aktuelle Betriebsdaten von Funktionseinheiten des Rundfunkempfängers hat und die Funktionseinheiten eine systeminterne Uhr für die aktuelle Zeit und eine Einschaltzeit-Messeinrichtung aufweisen, welche eine Einschaltdauer des Zugriffs auf den Rundfunkempfänger erfasst,
- die Gerätesteuerung für jedes Nutzerkonto sowohl die Vorgabedaten, welche im Konfigurationsmenü individuell eingebbar sind, als auch Zeitdaten einer aktuell von der Einschaltzeit-Messeinrichtung ermittelte Einschaltdauer kumulativ und separat in den nichtflüchtigen Speichermitteln speichert und die Vorgabedaten für das aktuelle Nutzerkonto mit den aktuellen Betriebsdaten periodisch vergleicht, um den Zugriff zu sperren, wenn aktuell erfasste Betriebsdaten außerhalb der Vorgaben liegen
- die Gerätesteuerung für jedes separate Nutzerkonto ein an den Mitbenutzer angepasstes Bedienmenü bereitstellt, welches nur solche Programmdienste anzeigt, zu denen keine Restriktionen gespeichert sind.

2. Benutzungskontrolleinrichtung nach Anspruch 1, bei der die Gerätesteuerung nur dann die Einstelloptionen zum Aktivieren und Konfigurieren eines separaten Nutzerkontos freigibt, wenn für einen erneuten Zugang zum Konfigurationsmenü und zu einem restriktionsfreien Wiedergabemenü eine Codeabfrage aktiviert ist.

3. Benutzungskontrolleinrichtung nach Anspruch 1, bei der im Konfigurationsmenü mindestens für einen Mitbenutzer ein Nutzercode angelegt werden kann, für das die Gerätesteuerung eine Codeabfrage des persönlichen Nutzercodes realisiert.

4. Benutzungskontrolleinrichtung nach Anspruch 1, bei der im Konfigurationsmenü sowohl ein separates Einrichten eines zeitlichen Nutzungskontingents durch Vorgaben für eine maximale Einschaltdauer als auch ein separates Einrichten zeitlicher Restriktionen zu einer kontospezifischen Empfangs-Tageszeit und sachliche Restriktionen bezüglich einer kontospezifischen Sperre der Medienwiedergabe und von Programmdiensten unterstützt.

5. Benutzungskontrolleinrichtung nach Anspruch 4, bei der die zu Nutzerkonten separat gespeicherten Vorgabedaten Restriktionen zu Abschnitten von Tageszeiten enthalten, in denen die Gerätesteuerung den Zugriff auf den Rundfunkempfänger für das aktuelle Nutzerkonto sperrt.

6. Benutzungskontrolleinrichtung nach Anspruch 4, bei der die zu Nutzerkonten separat gespeicherten Vorgabedaten der elektronischen Programmführereinheit Markierungen von Programmdiensten enthalten, welche ein kontospezifisches Sperren jedes markierten Programmdienstes für die Multimediawiedergabe unterstützen.

7. Benutzungskontrolleinrichtung nach Anspruch 1, bei der die Einschaltzeit-Messeinrichtung die kumulierte Einschaltdauer, in der der Zugriff auf den Rundfunkempfänger erfolgt, für jedes Nutzerkonto erfasst.

8. Benutzungskontrolleinrichtung nach Anspruch 7, bei der die Einschaltzeit-Messeinrichtung die Kumulation der Einschaltdauer unterbricht, wenn die Medienwiedergabe eines Programmbeitrages durch den Mitbenutzer unterbrochen wird.

9. Benutzungskontrolleinrichtung nach Anspruch 1, bei der die Gerätesteuerung die Medienwiedergabe sperrt, wenn ein Datenvergleich ergibt, dass im aktuell genutzten Nutzerkonto entweder die vorgegebene maximalen Einschaltdauer überschritten ist oder der Empfänger einen Programmwechsel zu einem gesperrten Programmdienst ausführen oder der Empfänger während einer ausgeschlossenen Tageszeit benutzt werden soll.

10. Benutzungskontrolleinrichtung nach Anspruch 1, bei der mindestens ein Nutzerkonto existiert, das den Zugriff auf den Rundfunkempfänger ohne eine Abfrage eines persönlichen Nutzercodes erlaubt.

11. Benutzungskontrolleinrichtung nach Anspruch 1, bei der die Gerätesteuerung selbsttätig einen Benutzer-Vollzugang anlegt, der eine Codeabfrage bewirkt, wenn mindestens ein separates Nutzerkonto aktiviert ist, so dass eine restriktionsfreie Wiedergabe nur für den durch den Gerätecode autorisierten Benutzer möglich ist.

12. Benutzungskontrolleinrichtung nach Anspruch 1, bei der die Gerätesteuerung vor dem selbsttätigen Sperren des Wiedergabemenüs eine Informationsausgabe die sowohl ein zeitlich nahendes Erreichen, als auch das unmittelbare Überschreiten, des individuellen Nutzungskontingents oder der Restriktionen anzeigt.

13. Benutzungskontrolleinrichtung nach Anspruch 1, bei der die Nutzerkonten so konfiguriert werden, dass eine Rechteverwaltung für den Zugriff auf den Rundfunkempfänger derart realisiert wird, dass für den autorisierten Nutzer alle Dienste freigegeben und für alle anderen Mitbenutzer gesperrt sind.

14. Benutzungskontrolleinrichtung nach Anspruch 1, bei der der autorisierte Nutzer jedem Mitbenutzer im entsprechenden Nutzerkonto ein Alter zuweist, so dass die Benutzerkontrolleinrichtung nur noch einen Vergleich der in der Zusatzinformation zu einem ausgewählten Programmbeitrag empfangenen Altersbeschränkung durchführt und dem Mitnutzer automatisch die Wiedergabe des Programmbeitrages sperrt oder freigibt.
